# EUROPÄISCHE PATENTSCHRIFT

(11) **EP 2 680 024 B1**
(45) Veröffentlichungstag und Bekanntmachung des Hinweises auf die Patenterteilung: **23.09.2020**
(21) Anmeldenummer: 13003220.4
(22) Anmeldetag: 24.06.2013
(51) Int. Cl.: G01S 5/00, G01S 5/12, G01S 5/16

(54) **System und Verfahren zur Positionsbestimmung einer Kommunikationsplattform**
System and method for determining the position of a communication platform
Système et procédé de détermination de la position d'une plate-forme de communication

(30) Priorität: 28.06.2012 DE 102012012898; 28.06.2012 US 201261665506 P
(43) Veröffentlichungstag der Anmeldung: 01.01.2014
(73) Patentinhaber: Tesat-Spacecom GmbH & Co. KG, 71522 Backnang (DE)
(72) Erfinder: Heine, Frank, 74535 Mainhardt (DE); Motzigemba, Matthias, 71570 Oppenweiler (DE); Seel, Stefan, 71540 Murrhardt (DE)
(74) Vertreter: LKGLOBAL Lorenz & Kopf PartG mbB Patentanwälte

(56) Entgegenhaltungen:
- EP-A1- 1 986 018
- WO-A1-00/52496
- DE-A1- 3 526 564
- GB-A- 2 089 615
- US-A- 3 206 605
- US-A1- 2011 248 887
- US-A1- 2012 131 650

## Beschreibung

Die vorliegende Erfindung betrifft ein System zur Positionsbestimmung einer Kommunikationsplattform sowie ein Verfahren zur Positionsbestimmung einer Kommunikationsplattform. Insbesondere betrifft die vorliegende Erfindung die Positionsbestimmung unter Verwendung einer gerichteten bzw. gebündelten Kommunikationsverbindung von einer Kommunikationsplattform zu einer weiteren Kommunikationsplattform bzw. zwischen diesen beiden Kommunikationsplattformen.

Derzeit bekannt sind verschiedene Verfahren zur Bestimmung einer Position, beispielsweise eines Fortbewegungsmittels auf der Erdoberfläche bzw. im Luftraum darüber. Das dabei geläufigste Absolutpositionsbestimmungsverfahren basiert auf Radiofrequenz-Satellitensignalen und wird beispielsweise beim Global Positioning System (GPS) oder den vergleichbaren Systemen Galileo bzw. Glonass verwendet. Durch den Empfang der entsprechenden Signale von zumindest drei Satelliten lässt sich dabei durch Triangulation unter Verwendung der bekannten, absoluten Satellitenpositionen eine Position im dreidimensionalen Raum des Empfängers bestimmen. Satellitengestützte Ortsbestimmungsverfahren unter Verwendung von RF-Signalen wiederum sind störanfällig für beispielsweise aufgestellte, erdnahe Störsender, welche die von den Satelliten ausgesandten RF-Signale überlagern und so deren Auswertung erschweren bzw. unmöglich machen können.

Weitere bekannte Positionsbestimmungsverfahren basieren beispielsweise auf einer bekannten Infrastruktur von Kommunikationsnetzen, setzen somit deren Vorhandensein voraus.

Relative Positionsbestimmungsverfahren verwenden beispielsweise Bewegungsrichtung sowie verstrichene Zeit, z.B. unter Verwendung eines Magnetkompasses zusammen mit einem Zeitinstrument oder eines Gyroskops bzw. Kreiselkompasses, um ausgehend von einer bekannten Position und Bewegungsrichtung eine relative Positionsveränderung bestimmen und so jeweils eine aktuelle Position berechnen zu können. Relativen Positionsbestimmungsverfahren gemein ist jedoch, dass sich kleine Fehler bzw. Abweichungen in der Kursbestimmung über Zeit aufsummieren und zu einer angenommenen jedoch signifikant falschen Position führen können.

US 2011/0248887 A1 beschreibt ein System und ein Verfahren zum Bestimmen einer Position eines Nutzergeräts auf der Erdoberfläche unter Nutzung von Strahlungsbündeln, die von einem Satelliten oder einer anderen Quelle ausgehen.

EP 1 986 018 A1 beschreibt ein System zum Bestimmen der Relativposition von zwei Satelliten in einem Satellitenverbund. Hierbei wird von einem ersten Satelliten ein Strahl ausgesandt, welcher von zumindest drei an einem zweiten Satelliten angeordneten und voneinander beabstandeten Detektoren empfangen wird. Basierend auf der Intensität des von jedem Detektor empfangenen Strahlungssignals und der bekannten relativen Anordnung der Detektoren wird auf eine relative Anordnung des ersten und zweiten Satelliten geschlossen.

Eine Aufgabe der vorliegenden Erfindung mag somit darin gesehen werden, eine neuartige Positionsbestimmung bereitzustellen, welche vergleichbar mit satellitengestützten RF-Signalen eine absolute Positionsbestimmung ermöglicht, jedoch eine verringerte Störanfälligkeit aufweist. Die Erfindung wird durch die unabhängigen Ansprüche definiert.

Demgemäß wird ein System zur Positionsbestimmung einer Kommunikationsplattform, eine erste Kommunikationsplattform sowie eine zweite Kommunikationsplattform und ein Verfahren zur Positionsbestimmung einer Kommunikationsplattform gemäß der unabhängigen Ansprüche angezeigt. Bevorzugte Ausgestaltungen ergeben sich aus den abhängigen Ansprüchen.

Gemäß einer exemplarischen Ausgestaltung der vorliegenden Erfindung wird ein System zur Positionsbestimmung einer Kommunikationsplattform angezeigt, aufweisend eine erste Kommunikationsplattform sowie eine zweite Kommunikationsplattform. Hierbei steht die erste Kommunikationsplattform in Kommunikationsverbindung mit der zweiten Kommunikationsplattform, wobei die Kommunikationsverbindung als eine bündelbare Kommunikationsverbindung ausgebildet ist. Das System ist ausgeführt, die Richtung bzw. Orientierung der Bündelung der Kommunikationsverbindung zu bestimmen. Das System ist ausgeführt, durch diese bestimmte Richtung der Bündelung der Kommunikationsverbindung und eine bestimmte Position der ersten Kommunikationsverbindung eine Position der zweiten Kommunikationsplattform zu bestimmen. Die erste Kommunikationsplattform ist eine erdferne Plattform. Die Kommunikationsverbindung ist eine Laserkommunikationsverbindung und das System ist ausgeführt, durch Auswerten eines Empfangsleistungspegels der Laserkommunikationsverbindung zu detektieren, inwieweit sich die zweite Kommunikationsplattform im Zentrum oder am Rande eines Ausbreitungsvolumens der Laserkommunikationsverbindung befindet und die Position der zweiten Kommunikationsplattform in dem Ausbreitungsvolumen der Laserkommunikationsverbindung durch dynamische lokale Rasterverfahren zu bestimmen. Das System ist ausgeführt, einen Zeitabgleich eines ausgesendeten Kommunikationssignals zwischen erster Kommunikationsplattform und zweiter Kommunikationsplattform vorzunehmen und durch die Laufzeit sowie die Ausbreitungsgeschwindigkeit der Kommunikationsverbindung einen Abstand zwischen erster Kommunikationsplattform und zweiter Kommunikationsplattform zu bestimmen und eine dreidimensionale Position der zweiten Kommunikationsplattform in dem Ausbreitungsvolumen der Laserkommunikationsverbindung zu bestimmen In diesem System wird eine erste Kommunikationsplattform verwendet, welche in Kommunikationsverbindung mit einer zweiten Kommunikationsplattform stehen kann. Die Kommunikationsverbindung kann wiederum als bündelbare Kommunikationsverbindung ausgebildet sein, wobei die Richtung bzw. Orientierung der Bündelung der Kommunikationsverbindung bestimmbar ist. Durch diese bestimmbare Bündelung der Kommunikationsverbindung mag nachfolgend eine Position der zweiten Kommunikationsplattform bestimmbar sein.

Gemäß einer weiteren exemplarischen Ausgestaltung der vorliegenden Erfindung wird eine zweite Kommunikationsplattform angezeigt, welche von einer ersten Kommunikationsplattform eine Kommunikationsverbindung empfängt, wobei die erste Kommunikationsplattform eine erdferne Plattform ist, wobei die Kommunikationsverbindung wiederum als eine bündelbare Kommunikationsverbindung ausgebildet ist. Die zweite Kommunikationsplattform ist ausgeführt, eine Richtung bzw. Orientierung der Bündelung der Kommunikationsverbindung zu bestimmen, wobei zweite Kommunikationsplattform ausgeführt ist, durch die bestimmte Bündelung der Kommunikationsverbindung und eine bestimmte Position der ersten Kommunikationsplattform eine Position der zweiten Kommunikationsplattform zu bestimmen. Die Kommunikationsverbindung ist eine Laserkommunikationsverbindung und die zweite Kommunikationsplattform ist ausgeführt, durch Auswerten eines Empfangsleistungspegels der Laserkommunikationsverbindung zu detektieren, inwieweit sie sich im Zentrum oder am Rande eines Ausbreitungsvolumens der Laserkommunikationsverbindung befindet und ihre Position in dem Ausbreitungsvolumen der Laserkommunikationsverbindung durch dynamische lokale Rasterverfahren zu bestimmen. Die zweite Kommunikationsplattform ist ausgeführt, ein Kommunikationssignal, welches ein Zeitreferenz- bzw. Flugzeitsignal bereitstellt, mit einem Zeitreferenzsignal in der zweiten Kommunikationsplattform abzugleichen, um über eine Laufzeitbestimmung eine Entfernungsbestimmung der zweiten Kommunikationsplattform von der ersten Kommunikationsplattform vorzunehmen, und ausgehend von der bekannten Position der ersten Kommunikationsplattform sowie der Ausbreitungsgeometrie und -geschwindigkeit der Kommunikationsverbindung eine Höhe der zweiten Kommunikationsplattform zu bestimmen.

Gemäß einer weiteren exemplarischen Ausgestaltung der vorliegenden Erfindung wird ein Verfahren zur Positionsbestimmung einer Kommunikationsplattform angezeigt, aufweisend die Schritte Bereitstellen einer Kommunikationsverbindung zwischen einer ersten Kommunikationsplattform und einer zweiten Kommunikationsplattform, wobei die erste Kommunikationsplattform eine erdferne Plattform ist, wobei die erste Kommunikationsplattform in Kommunikationsverbindung mit der zweiten Kommunikationsplattform steht, wobei die Kommunikationsverbindung als eine gebündelte Kommunikationsverbindung ausgebildet ist, Bestimmen der Richtung bzw. Orientierung der Bündelung der Kommunikationsverbindung und Bestimmen einer Position der zweiten Kommunikationsplattform basierend auf der bestimmten Richtung der Bündelung der Kommunikationsverbindung und einer bestimmten Position der ersten Kommunikationsplattform. Die Kommunikationsverbindung ist eine Laserkommunikationsverbindung und durch Auswerten eines Empfangsleistungspegels der Laserkommunikationsverbindung wird detektiert, inwieweit sich die zweite Kommunikationsplattform im Zentrum oder am Rande eines Ausbreitungsvolumens der Laserkommunikationsverbindung befindet und die Position der zweiten Kommunikationsplattform in dem Ausbreitungsvolumen der Laserkommunikationsverbindung wird durch dynamische lokale Rasterverfahren bestimmt. Das Verfahren weist weiterhin auf: Vornehmen eines Zeitabgleichs eines ausgesendeten Kommunikationssignals zwischen erster Kommunikationsplattform und zweiter Kommunikationsplattform und Bestimmen, durch die Laufzeit sowie die Ausbreitungsgeschwindigkeit der Kommunikationsverbindung, eines Abstands zwischen erster Kommunikationsplattform und zweiter Kommunikationsplattform sowie Bestimmen einer dreidimensionalen Position der zweiten Kommunikationsplattform in dem Ausbreitungsvolumen der Laserkommunikationsverbindung.

Die vorliegende Erfindung beschreibt ein System und ein Verfahren zur Positionsbestimmung einer ersten Kommunikationsplattform unter Mithilfe einer weiteren Kommunikationsplattform.

Im Rahmen der vorliegenden Erfindung soll der Begriff Kommunikationsplattform nicht einschränkend aufgefasst werden. Vielmehr soll eine Kommunikationsplattform lediglich, abhängig von deren Rolle im erfindungsgemäßen System, eine ausgehende Kommunikationsverbindung bereitstellen bzw. eine eingehende Kommunikationsverbindung annehmen können. Die Kommunikationsverbindung muss dabei nicht im herkömmlichen Sinne als Datenübertragungsverbindung einschränkend aufgefasst werden, sondern mag lediglich eine identifizierbare Information, beispielsweise eine eineindeutige ID einer solchen Kommunikationsverbindung, übermitteln können.

Auch denkbar ist, dass die erfindungsgemäße Kommunikationsverbindung lediglich eine Information bezüglich der Anwesenheit bzw. Abwesenheit der Kommunikationsverbindung bereitstellt. Beispielsweise, exemplarisch bezogen auf eine Laserkommunikationsverbindung, welche von einer Kommunikationsplattform ausgeht und von einer weiteren Kommunikationsplattform detektiert wird, beispielsweise unter Verwendung einer geeigneten Fotodiode, mag es für das erfindungsgemäße Konzept ausreichend sein, dass die Fotodiode die Anwesenheit bzw. Abwesenheit des Laserstrahls zu detektieren vermag, sofern die Kommunikationsverbindung selbst über andere geeignete Mittel identifiziert. Wenn in einem Anwendungsgebiet der zweiten Kommunikationsplattform beispielsweise ausschließlich eine (bestimmte) Kommunikationsverbindung überhaupt auftreten kann, so kann die reine Detektion ohne Identifikation derselbigen ausreichen.

Bevorzugt weist die Kommunikationsverbindung eine definierte Form, beispielsweise eine Bündelung, auf. Die Kommunikationsverbindung soll somit nicht omnidirektional, sondern eine definierte geometrische Ausgestaltung bzw. Form aufweisen. Wieder beispielsweise einen Laserstrahl bemühend, weist dieser in einem Nahfeld eine im Wesentlichen eindimensionale Ausgestaltung in Form einer eindimensionalen Linie auf. Wird nun dieser Laserstrahl detektiert, so lässt sich als Position zumindest angeben, dass die den Laserstrahl detektierende Kommunikationsplattform sich mit dem Empfänger, beispielsweise einer geeigneten Empfängerdiode, auf der Längserstreckungsrichtung des Laserstrahls befinden muss.

In einem Fernfeld wiederum, wie beispielsweise bei einem Abstand von mehreren 100 oder 1000 km von der Ursprungsquelle des Laserstrahls ist der Laserstrahl jedoch nicht mehr als idealisierte eindimensionale Linie aufzufassen, sondern weist eine im Wesentlichen kegelförmige Ausgestaltung auf, mit einem, abhängig vom Abstand zum Ursprung des Laserstrahls, abhängigen Radius des Kegels. Die Kommunikationsverbindung weist somit ein Ausbreitungsvolumen auf, in welchem die Kommunikationsverbindung detektierbar ist. Im Fernfeld lässt sich somit zumindest angeben, im Falle, dass ein solcher Laser detektiert wird, dass sich das Empfängerelement zumindest im Kegel des Laserstrahls, im Ausbreitungsvolumen, befindet. Die genaue Geometrie bzw. das Ausbreitungsvolumen der Kommunikationsverbindung mag sich jedoch mit bekannten mathematischen Methoden hinreichend genau feststellen lassen.

Ein Aspekt der vorliegenden Erfindung ist somit das Detektieren der Anwesenheit einer solchen Kommunikationsverbindung, was nachfolgend in dem Wissen resultiert, dass der Empfänger zumindest im Ausbreitungsvolumen dieser Kommunikationsverbindung angeordnet sein muss.

Ist nun die räumliche Ausbreitung der Kommunikationsverbindung hinreichend genau bekannt, lässt sich, basierend auf dem Wissen um die Ausbreitung, gleichfalls eine Position des Empfängerelementes bestimmen. Ist somit beispielsweise die Position einer ersten Kommunikationsplattform, welche als Sender für die Kommunikationsverbindung eingerichtet ist, hinreichend genau bestimmt und gleichzeitig die Ausbreitungsrichtung und Geometrie der Kommunikationsverbindung bekannt, lässt sich auf die Position einer weiteren Kommunikationsplattform, einer Empfängerkommunikationsplattform, welche in dem Ausbreitungsvolumen der Kommunikationsverbindung angeordnet ist, schließen.

Hierbei kann einerseits über die Kommunikationsverbindung die Information bezüglich der Position, Ausrichtung, Orientierung und dem Ausbreitungsvolumen der Kommunikationsverbindung übermittelt werden, oder aber die empfangende Kommunikationsplattform kann selbst, aus der Anwesenheit des Signals, auf seine Position schließen.

Besonders bevorzugt wird somit eine satellitengestützte Ortsbestimmung unter Verwendung einer Laserkommunikation zwischen einem Satelliten, somit einer erdfernen Plattform, und einer erdnahen, zurückkehrenden Plattform wie beispielsweise Flugzeuge, Drohnen, UAVs, Schiffe, Ballons etc. bereitgestellt. Die Möglichkeit zur Ortsbestimmung bzw. Flugrichtungsbestimmung der empfangenden Kommunikationsplattform wird somit dadurch realisiert, dass eine Kommunikationsverbindung mit bekannter Ausbreitungsrichtung und Ausbreitungsgeometrie bzw. Ausbreitungsvolumen, z.B. ein Laserstrahl, erfasst wird, welche Kommunikationsverbindung von einer Kommunikationsplattform, beispielsweise einem Satelliten mit (hochpräziser) bekannter Position, ausgesandt wird.

Das Kommunikationssignal kann hierbei selbst ein Zeitreferenz- bzw. Flugzeitsignal bereitstellen, welches gegebenenfalls mit einem Zeitreferenzsignal in der empfangenden Kommunikationsplattform abgeglichen werden kann, wodurch über eine Laufzeitbestimmung gleichzeitig eine Entfernungsbestimmung der zweiten Kommunikationsplattform von der ersten Kommunikationsplattform ermöglicht wird. Damit, ausgehend von der bekannten Position der ersten Kommunikationsplattform sowie der Ausbreitungsgeometrie und -geschwindigkeit der Kommunikationsverbindung, ist auch eine Höhenbestimmung der zweiten Kommunikationsplattform realisierbar.

Im Weiteren wird das erfindungsgemäße System basierend auf einer Satellitenplattform mit installiertem Laserkommunikationsterminal sowie einem Luftfahrzeug als empfangende, zweite Kommunikationsplattform beschrieben. Wie zuvor dargelegt sollen jedoch die exemplarische Ausgestaltung der Kommunikationsplattformen und der Kommunikationsverbindung nicht einschränkend aufgefasst werden.

Die erdferne Satellitenplattform (efP) weist ein Laserkommunikationsterminal auf, welches eingerichtet ist, mittels Laserstrahl eine Kommunikationsverbindung zu einer weiteren Kommunikationsplattform bereitzustellen. Diese Kommunikationsplattform kann beispielsweise stationär auf der Erdoberfläche angeordnet sein, wodurch eine solche Kommunikationsverbindung im Wesentlichen statisch ausgebildet ist, oder aber kann mit einer mobilen Kommunikationsplattform in Verbindung stehen, wobei hierbei, aufgrund der gebündelten Ausgestaltung der Kommunikationsverbindung sowie der Relativbewegung der zweiten Kommunikationsplattform zur ersten Kommunikationsplattform, ein Nachführen der Kommunikationsverbindung, gerichtet auf die zweite Kommunikationsplattform nötig werden kann.

Im Falle der statischen Ausgestaltung der Kommunikationsverbindung mag es ausreichend sein, dass eine zweite Kommunikationsplattform, welche beispielsweise das Volumen der Kommunikationsverbindung durchfliegt, die Kommunikationsverbindung identifizieren kann. Die reine Anwesenheit einer solchen Kommunikationsverbindung kann ebenfalls ausreichen, insbesondere unter Verwendung weiterer Informationen wie der geometrischen Ausgestaltung der stationären Kommunikationsverbindung, um eine Position der zweiten Kommunikationsplattform im Ausbreitungsvolumen der Kommunikationsverbindung zu bestimmen.

Im Falle einer variabel ausgerichteten Kommunikationsverbindung, beispielsweise in dem Fall, dass die Kommunikationsverbindung der zweiten Kommunikationsplattform nachgeführt wird, kann diese selbst weitere Informationen bezüglich der Position der ersten Kommunikationsplattform und/oder der Richtung bzw. Orientierung oder aber auch bzgl. des Ausbreitungsvolumens der Kommunikationsverbindung übertragen und an die zweite Kommunikationsplattform bereitstellen.

Die Positionierung der zweiten Kommunikationsplattform im Ausbreitungsvolumen der Kommunikationsverbindung ermöglicht nun eine Bestimmung der (eigenen) Position durch die zweite Kommunikationsplattform, z.B. basierend auf den von der ersten Kommunikationsplattform übermittelten Daten. Gleichfalls kann die erste Kommunikationsplattform eine direkt verwendbare Positionsinformation übertragen, so dass jede Kommunikationsplattform, welche diese Information empfängt, aufgrund der Tatsache, dass sie diese Information empfangen kann, die aktuelle Position bestimmen kann.

Somit kann ein Laserkommunikationsterminal auf einer Satellitenplattform nicht nur zur Informationsübertragung genutzt werden, sondern auch zur Ortsbestimmung des Empfängers. Ausgehend von einem geostationären Satelliten und einem herkömmlichen Laserkommunikationsterminal hätte ein auf die Erdoberfläche auftretender Laserstrahl einen ca. 1 km großen Durchmesser bzw. Footprint. Eine Gegenstation für die Satellitenplattform und somit eine Kommunikationsplattform wie beispielsweise eine erdnahe, zurückkehrende Plattform, welche den Laserstrahl erfassen kann, weiß somit, dass sie sich im Ausbreitungsvolumen der Kommunikationsverbindung zwischen der Satellitenplattform und dem 1 km großen Footprint auf der Erdoberfläche befindet. Inwieweit sich die empfangende, zweite Plattform im Zentrum oder am Rande des Ausbreitungsvolumens einer Kommunikationsverbindung befindet, lässt sich z.B. durch Auswertung eines Empfangsleistungspegels detektieren. Durch bekannte dynamische, lokale Rasterverfahren lässt sich die Position innerhalb des Ausbreitungsvolumens, insbesondere der Abstand und die Richtung, von einer angenommenen Ausbreitungsmittelachse ebenfalls genauer bestimmen und somit die Position der zweiten Kommunikationsplattform im Ausbreitungsvolumen der Kommunikationsverbindung.

Wenn im Weiteren noch ein Zeitabgleich des ausgesendeten Kommunikationssignals zwischen erster Kommunikationsplattform und zweiter Kommunikationsplattform erfolgt, kann durch die Laufzeit sowie die Ausbreitungsgeschwindigkeit der Kommunikationsverbindung (regelmäßig Lichtgeschwindigkeit) ein Abstand von erster Kommunikationsplattform und zweiter Kommunikationsplattform bestimmt werden. Mit diesen Informationen lässt sich eine dreidimensionale Position der zweiten Kommunikationsplattform im Ausbreitungsvolumen der Kommunikationsverbindung bestimmen und somit, ausgehend von einer hochpräzise bekannten Position der ersten Kommunikationsplattform, die Position der zweiten Kommunikationsplattform.

Eine zuvor beschriebene, insbesondere auf einem Laserkommunikationsterminal basierende, Positionsbestimmung mag beispielsweise gegenüber Radiofrequenzsignalen von GPS oder Galileo insbesondere durch eine erhöhte Störsicherheit gegenüber erdnahen Störsendern bestehen. Speziell im Falle eines Laserverfahrens ließe sich dieses nur durch ein Objekt stören, welches direkt in den Laserstrahl zwischen erster Kommunikationsplattform und zweiter Kommunikationsplattform eingebracht wird.

Vorteil gegenüber magnetgestützten bzw. initialsystemgestützten Ortsbestimmungsverfahren ist eine wesentlich höhere Genauigkeit sowie eine gleichbleibende Ortungsgenauigkeit über eine mögliche Flugdauer, da sich insbesondere keine Relativfehler zu einem Gesamtfehler aufaddieren.

Besonders bevorzugt werden mehrere bekannte Positionsbestimmungsverfahren zusätzlich verwendet, um eine redundante Positionsbestimmung und insbesondere eine gegenseitige Positionsverifikation zu ermöglichen.

Im Weiteren werden bevorzugte Ausgestaltungen des erfindungsgemäßen Systems zur Positionsbestimmung einer Kommunikationsplattform beschrieben.

Gemäß einer weiteren bevorzugten Ausgestaltung der vorliegenden Erfindung mag die erste Kommunikationsplattform die Richtung bzw. Orientierung der Bündelung der Kommunikationsverbindung, die Position der ersten Kommunikationsplattform und/oder die Position der zweiten Kommunikationsplattform an die zweite Kommunikationsplattform übermitteln.

Aus diesen Informationen kann die zweite Kommunikationsplattform nachfolgend eine Position im Ausbreitungsvolumen der Kommunikationsverbindung bestimmen.

Gemäß einer weiteren bevorzugten Ausgestaltung der vorliegenden Erfindung mag die erste Kommunikationsplattform eingerichtet sein, die gebündelte Kommunikationsverbindung der zweiten Kommunikationsplattform nachzuführen.

Somit kann die Kommunikationsverbindung zwischen der ersten Kommunikationsplattform und der zweiten Kommunikationsplattform bewegungsunabhängig und positionsunabhängig beibehalten werden. Bevorzugt wird beim Nachführen der Kommunikationsverbindung eine jeweils aktuelle Position bzw. Orientierung des geometrischen Ausbreitungsvolumens der - Kommunikationsverbindung an die zweite Kommunikationsplattform übermittelt. Hierdurch kann über eine kontinuierliche Bestimmung der Position der zweiten Kommunikationsplattform im Ausbreitungsvolumen der Kommunikationsverbindung eine jeweils aktuelle Position der zweiten Kommunikationsplattform bestimmt werden.

Gemäß einer weiteren bevorzugten Ausgestaltung der vorliegenden Erfindung mag die bündelbare Kommunikationsverbindung als eine Richtkommunikationsverbindung ausgebildet sein.

Gemäß einer weiteren bevorzugten Ausgestaltung der vorliegenden Erfindung mag über die Kommunikationsverbindung eine Information, insbesondere ein Laufzeitsignal zur Höhenbestimmung der zweiten Kommunikationsplattform übermittelt werden.

Hierdurch lässt sich die Beabstandung zwischen der ersten Kommunikationsplattform und der zweiten Kommunikationsplattform bestimmen und somit die Position auf einer Kugeloberfläche, wobei die erste, sendende Kommunikationsplattform im Mittelpunkt der Kugel angeordnet ist. Durch Schnittmengenbildung der Kugeloberfläche mit der geometrischen Ausbreitung bzw. dem Ausbreitungsvolumen der Kommunikationsverbindung lässt sich die mögliche Position der zweiten Kommunikationsplattform weiter einschränken und genauer bestimmen.

Gemäß einer weiteren bevorzugten Ausgestaltung der vorliegenden Erfindung mag die Kommunikationsverbindung ein Identifikationsmerkmal zur eindeutigen Identifizierung der Kommunikationsverbindung aufweisen.

So mag beispielsweise eine zweite Kommunikationsplattform, welche (überraschend) eine Kommunikationsverbindung empfängt, unter Verwendung des Identifikationsmerkmals und gegebenenfalls weiterführender Informationen über die Position bzw. Orientierung der zu diesem Identifikationsmerkmal gehörenden Kommunikationsverbindung eine Position bestimmen. So lässt sich eine flexible Reaktion auf unterschiedliche, unabhängige Kommunikationsverbindungen durch die zweite Kommunikationsplattform realisieren.

Gemäß einer weiteren bevorzugten Ausgestaltung der vorliegenden Erfindung mag durch das Identifikationsmerkmal die Richtung bzw. Orientierung der Bündelung der Kommunikationsverbindung und/oder die Position der ersten Kommunikationsplattform ermitteln bzw. bestimmen.

Beispielsweise kann die zweite Kommunikationsplattform, durch Abfrage einer Datenbank, eine Information bezüglich der Richtung und Orientierung der Bündelung der zu dem Identifikationsmerkmal gehörenden Kommunikationsverbindung ermitteln und somit flexibel auf eine (überraschend) eintreffende Kommunikationsverbindung reagieren und hierüber seine Position bestimmen.

Gemäß einer weiteren bevorzugten Ausgestaltung der vorliegenden Erfindung mag die zweite Kommunikationsplattform eingerichtet sein, bei einem Durchfliegen einer gebündelten Kommunikationsverbindung die eigene Position zu bestimmen.

Dies mag insbesondere dann relevant sein, wenn die Kommunikationsverbindung nicht eine der zweiten Kommunikationsplattform nachgeführte Verbindung ist, sondern beispielsweise mit einer stationären Erdgegenstation in Verbindung steht bzw. definierte Punkte, z.B. auf der Erdoberfläche, anpeilt. Somit ist auch die geometrische Form bzw. das Ausbreitungsvolumen der Kommunikationsverbindung im Wesentlichen, zumindest temporär, stationär, wobei die zweite Kommunikationsplattform trotzdem durch das Wissen bezüglich der Richtung und Orientierung der Bündelung dieser Kommunikationsverbindung die eigene Position bestimmen kann. Auch kann eine Kommunikationsplattform unter Verwendung einer einer anderen Kommunikationsplattform nachgeführten Kommunikationsverbindung durch Information bzgl. der Richtung und Orientierung des Ausbreitungsvolumen der Kommunikationsverbindung die eigene Position bestimmen.

Gemäß einer weiteren bevorzugten Ausgestaltung der vorliegenden Erfindung mag die Kommunikationsverbindung als eine optische Kommunikationsverbindung, insbesondere als eine Laserkommunikationsverbindung ausgebildet sein.

Gemäß einer weiteren bevorzugten Ausgestaltung der vorliegenden Erfindung mag die erste Kommunikationsplattform eine erdferne Plattform, insbesondere eine Plattform zum Betrieb außerhalb der Erdatmosphäre, weiter insbesondere ein Satellit, weiter insbesondere in einem Low-Earth-Orbit (LEO) oder geostationärem Orbit (GEO) sein und/oder die zweite Kommunikationsplattform eine erdnahe, zurückkehrende Plattform, insbesondere eine Plattform zum Betrieb in der Erdatmosphäre, weiter insbesondere ein Luftfahrzeug, weiter insbesondere ein Flugzeug sein.

Weitere Ausführungsbeispiele und Vorteile der Erfindung ergeben sich aus der nachfolgenden Figurenbeschreibung. In verschiedenen Figuren werden gleiche oder ähnliche Elemente mit gleichen oder ähnlichen Bezugszeichen versehen.

Darstellungen in den Figuren sind schematisch und nicht maßstäblich, mögen jedoch qualitative Größenverhältnisse wiedergeben.

Es zeigen:
- **Fig. 1**: eine exemplarische Ausgestaltung des erfindungsgemäßen Systems zur Positionsbestimmung einer Kommunikationsplattform;
- **Fig. 2a,b**: weitere exemplarische Ausgestaltungen einer Positionsbestimmung einer Kommunikationsplattform gemäß der vorliegenden Erfindung;
- **Fig. 3**: eine exemplarische Darstellung des erfindungsgemäßen Verfahrens zur Positionsbestimmung einer Kommunikationsplattform.

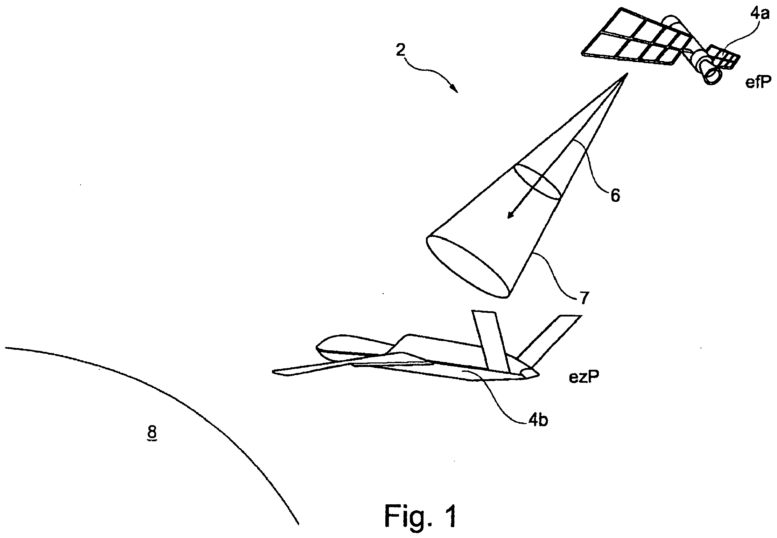

Figur 1 zeigt eine exemplarische Ausgestaltung des erfindungsgemäßen Systems zur Positionsbestimmung einer Kommunikationsplattform.

Das System zur Positionsbestimmung 2 weist eine in der Erdatmosphäre über der Erdoberfläche 8 angeordnete erste Kommunikationsplattform 4a, exemplarisch eine erdferne Satellitenplattform efP, sowie eine zweite Kommunikationsplattform 4b, exemplarisch eine erdnahe, zurückkehrende Plattform ezP auf. Zwischen beiden Kommunikationsplattformen 4a,b ist eine Kommunikationsverbindung 6 mit einem Ausbreitungsvolumen 7 der Kommunikationsverbindung ausgebildet. Das Ausbreitungsvolumen bzw. Volumen der Kommunikationsverbindung 6 mag als dasjenige Volumen verstanden werden, in welchem ein auf der zweiten Kommunikationsplattform 4b angeordneter Empfänger ein Signal von der ersten Kommunikationsplattform 4a empfangen, das Signal der Kommunikationsverbindung 6 detektieren bzw. die über die Kommunikationsverbindung 6 übertragenen Daten empfangen kann.

Die Position der ersten Kommunikationsplattform 4a selbst wiederum kann bekannt sein, ebenso wie die Richtung bzw. Orientierung des Ausbreitungsvolumens 7 der Kommunikationsverbindung 6. Diese Information kann, zumindest teilweise, über die Kommunikationsverbindung 6 zur zweiten Kommunikationsplattform 4b übertragen werden, oder aber diese mag die Information selbst bereithalten und lediglich die Kommunikationsverbindung 6 detektieren bzw. diese über ein definiertes Identifikationsmerkmal identifizieren.

Erhält somit die zweite Kommunikationsplattform 4b Informationen bezüglich der Kommunikationsverbindung 6 oder aber Positions- und/oder Orientierungsinformationen zu erster Kommunikationsplattform 4a bzw. Kommunikationsverbindung 6, kann die zweite Kommunikationsplattform 4b ihre Position im Ausbreitungsvolumen 7 der Kommunikationsverbindung 6 bestimmen und somit ihre (absolute) Position gegenüber Erde 8.

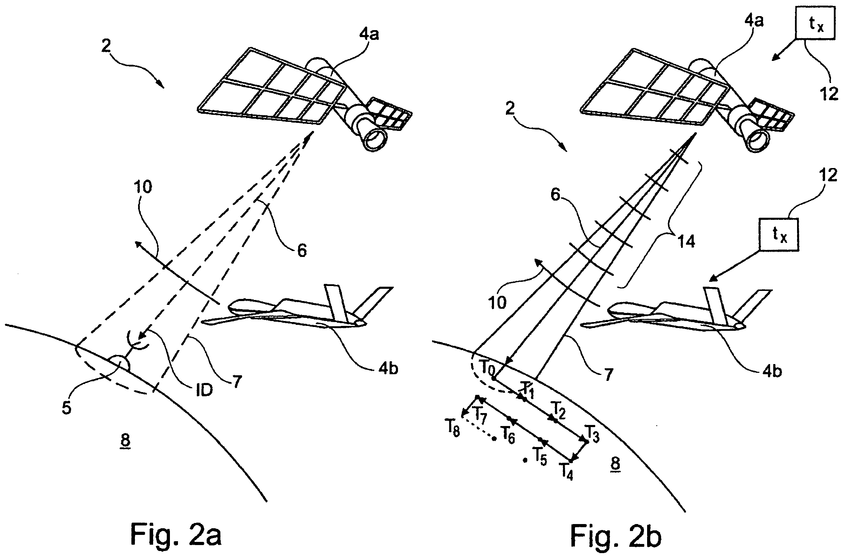

Weiter Bezug nehmend auf Figur 2a wird eine exemplarische Ausgestaltung des erfindungsgemäßen Systems mit stationärer Kommunikationsverbindung 6 beschrieben.

Figur 2a entspricht hierbei im Wesentlichen der Figur 1, wobei jedoch die erste Kommunikationsplattform 4a unter Verwendung der Kommunikationsverbindung 6 in kommunikativem Kontakt mit einer Bodenstation 5 auf Erde 8 steht. Kommunikationsverbindung 6 wiederum weist ein Ausbreitungsvolumen 7 auf. Die zweite Kommunikationsplattform 4b durchfliegt auf ihrem Weg bzw. ihrer Flugroute 10 das Volumen 7 der Kommunikationsverbindung 6. Die zweite Kommunikationsplattform 4b mag nun bereits Informationen vorrätig halten bzw. ermitteln oder abrufen können, um beispielsweise das Ausbreitungsvolumen 7 dieser Kommunikationsverbindung 6 zu bestimmen. Hierzu zählen beispielsweise Positionsinformationen zgl. der Bodenstation 5, der Position der ersten Kommunikationsplattform 4a und/oder der Position und/oder Orientierung des Ausbreitungsvolumens 7. Die Kommunikationsverbindung 6 kann dabei auch ein Identifikationsmerkmal ID aufweisen, welches eineindeutig die Kommunikationsverbindung 6 identifiziert und somit eine vereinfachte Informationsbeschaffung der zweiten Kommunikationsplattform 4b beispielsweise durch Abfrage einer Datenbank ermöglicht. Mit dem Wissen um die (stationäre) Kommunikationsverbindung 6 der Figur 2a mag die zweite Kommunikationsplattform 4b auf ihrer Flugroute 10 beim Durchfliegen des Ausbreitungsvolumen 7 ihre Position bestimmen, somit eine relative Position zur Bodenstation 5 und damit zu Erde 8.

Weiter Bezug nehmend auf Figur 2b wird eine weitere exemplarische Ausgestaltung des erfindungsgemäßen Systems 2 beschrieben.

Hierbei ist exemplarisch die Kommunikationsverbindung 6 nicht auf die zweite Kommunikationsplattform 4b oder eine Bodenstation 5 ausgerichtet, sondern auf bestimmte, vordefinierte Positionen auf der Erdoberfläche 8. Diese Positionen werden zu verschiedenen Zeitpunkten T₀, T₁ ... T₈ ... Tₙ eingenommen.

Der Satellitenlaser muss somit nicht prinzipiell eine Information mitschicken, wohin er gerade zeigt. Wenn der Satellit nach einem vorher vereinbarten "Fahrplan" den Boden abrastert, benötigt der Empfänger nur eine Zeitinformation und den Information über den "Fahrplan", somit die Rasterung bzw. zu welchem (absoluten) Zeitpunkt die Kommunikationsverbindung auf welchen Ortspunkt, der Erdoberfläche, gerichtet ist.

Die erste Kommunikationsplattform 4a kann über eine Zeitinformation 12 tₓ die Ausrichtung auf eine bestimmte Bodenposition zu einem Zeitpunkt Tₓ bereitstellen. Auch die zweite Kommunikationsplattform 4b kann eine (synchrone) Zeitinformation 12 tₓ aufweisen. Zusammen mit einem Wissen, welche Position auf der Erdoberfläche 8 zu einem bestimmten Zeitpunkt Tₓ eingenommen wird, kann die zweite Kommunikationsplattform 4b so die Position und/oder Orientierung der Kommunikationsverbindung 6, insbesondere deren Ausbreitungsvolumen 7 bestimmen. Beim Durchfliegen auf Flugroute 10 der zweiten Kommunikationsplattform 4b durch das Ausbreitungsvolumen 7 der Kommunikationsverbindung 6 unter Berücksichtigung eines bestimmten Zeitpunktes Tₓ kann somit die zweite Kommunikationsplattform 4b die derzeit aktuelle Orientierung der Kommunikationsverbindung 6 ermitteln, beispielsweise aus einer Datenbank auslesen, und so die aktuelle Orientierung der dynamisch variablen Kommunikationsverbindung 6 bestimmen. Mit dieser momentanen Ausrichtung der Kommunikationsverbindung 6 wiederum kann die zweite Kommunikationsplattform 4b ihre Position im Ausbreitungsvolumen 7 und damit relativ zur Erdoberfläche 8 bestimmen.

Gleichzeitig kann die erste Kommunikationsplattform 4a, basierend auf der Zeitinformation 12, in der Kommunikationsverbindung 6 eine Zeitinformation 14 mitsenden. Ein Vergleich der Zeitinformation 14 beim Empfang durch die zweite Kommunikationsplattform 4b mit deren (interner) Zeitinformation 12 tₓ und unter Berücksichtigung der Ausbreitungsgeschwindigkeit des Kommunikationssignals der Kommunikationsverbindung 6 lässt sich ein Abstand von erster und zweiter Kommunikationsplattform 4a,b sowie die Flughöhe der zweiten Kommunikationsplattform 4b relativ zur Erdoberfläche 8 bestimmen.

Diese Höhenbestimmung der zweiten Kommunikationsplattform 4b durch Verwendung der Zeitinformation 12/14 ist zwar in Figuren 1 und 2a nicht explizit dargestellt, dort jedoch gleichfalls einsetzbar.

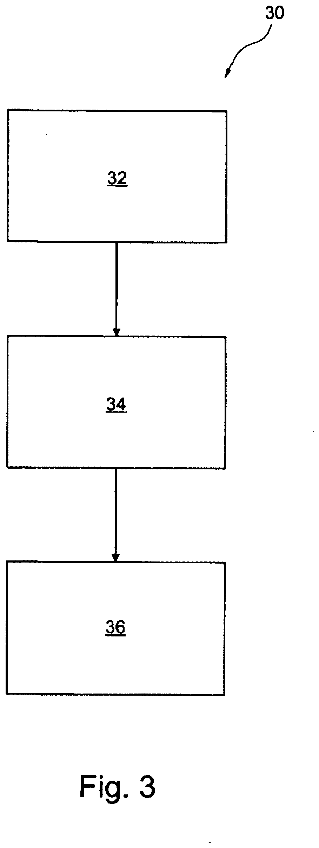

Weiter Bezug nehmend auf Figur 3 wird eine exemplarische Darstellung des erfindungsgemäßen Verfahrens zur Positionsbestimmung einer Kommunikationsplattform dargestellt.

Figur 3 zeigt ein Verfahren 30 zur Positionsbestimmung einer Kommunikationsplattform, aufweisend die Schritte Bereitstellen 32 einer Kommunikationsverbindung 6 zwischen einer ersten Kommunikationsplattform 4a und einer zweiten Kommunikationsplattform 4b, wobei zumindest die erste Kommunikationsplattform 4a in Kommunikationsverbindung 6 mit der zweiten Kommunikationsplattform 4b stehen kann, wobei die Kommunikationsverbindung 6 als eine bündelbare Kommunikationsverbindung ausgebildet ist, Bestimmen 34 der Richtung bzw. Orientierung der Bündelung der Kommunikationsverbindung 6 und Bestimmen 36 durch die bestimmbare Bündelung der Kommunikationsverbindung eine Position der zweiten Kommunikationsplattform 4b.

Ergänzend sei darauf hingewiesen, dass "aufweisend" oder "umfassend" keine anderen Elemente oder Schritte ausschließt und dass "eine" oder "ein" keine Vielzahl ausschließt.

### Bezugszeichen

- 2: System
- 4a,b: erste, zweite Kommunikationsplattform
- 5: Bodenstation
- 6: Kommunikationsverbindung
- 7: Ausbreitungsvolumen der Kommunikationsverbindung
- 8: Erde/Erdoberfläche
- 10: Flugroute/Flugrichtung
- 12/14: Zeitinformation

## Patentansprüche

1. System (2) zur Positionsbestimmung einer Kommunikationsplattform, aufweisend
eine erste Kommunikationsplattform (4a); und
eine zweite Kommunikationsplattform (4b);
wobei die erste Kommunikationsplattform (4a) in Kommunikationsverbindung (6) mit der zweiten Kommunikationsplattform (4b) steht;
wobei die Kommunikationsverbindung (6) als eine gebündelte Kommunikationsverbindung ausgebildet ist;
wobei das System ausgeführt ist, die Richtung der Bündelung der Kommunikationsverbindung (6) zu bestimmen; und
wobei das System ausgeführt ist, durch die bestimmte Richtung der Bündelung der Kommunikationsverbindung (6) und eine bestimmte Position der ersten Kommunikationsplattform (4a) eine Position der zweiten Kommunikationsplattform (4b) zu bestimmen,
wobei die erste Kommunikationsplattform (4a) eine erdferne Plattform ist; und
wobei das System ausgeführt ist, durch Auswerten eines Empfangsleistungspegels der Kommunikationsverbindung zu detektieren, inwieweit sich die zweite Kommunikationsplattform im Zentrum oder am Rande eines Ausbreitungsvolumens der Kommunikationsverbindung befindet;
**dadurch gekennzeichnet, dass**
die Kommunikationsverbindung eine Laserkommunikationsverbindung ist; und dass das System ausgeführt ist,
die Position der zweiten Kommunikationsplattform in dem Ausbreitungsvolumen der Laserkommunikationsverbindung durch dynamische lokale Rasterverfahren zu bestimmen; und
das System ausgeführt ist, einen Zeitabgleich eines ausgesendeten Kommunikationssignals zwischen erster Kommunikationsplattform und zweiter Kommunikationsplattform vorzunehmen und durch die Laufzeit sowie die Ausbreitungsgeschwindigkeit der Kommunikationsverbindung einen Abstand zwischen erster Kommunikationsplattform und zweiter Kommunikationsplattform zu bestimmen und eine dreidimensionale Position der zweiten Kommunikationsplattform in dem Ausbreitungsvolumen der Laserkommunikationsverbindung zu bestimmen.

2. System gemäß dem vorhergehenden Anspruch, wobei die erste Kommunikationsplattform (4a) die Richtung der Bündelung der Kommunikationsverbindung (6), die Position der ersten Kommunikationsplattform (4a) und/oder die Position der zweiten Kommunikationsplattform (4b) an die zweite Kommunikationsplattform (4b) übermittelt.

3. System gemäß zumindest einem der vorhergehenden Ansprüche, wobei die erste Kommunikationsplattform (4a) eingerichtet ist, die gebündelte Kommunikationsverbindung (6) der zweiten Kommunikationsplattform (4b) nachzuführen.

4. System gemäß zumindest einem der vorhergehenden Ansprüche, wobei die gebündelte Kommunikationsverbindung (6) ausgebildet ist als eine Richtkommunikationsverbindung.

5. System gemäß zumindest einem der vorhergehenden Ansprüche, wobei die Kommunikationsverbindung (6) ein Identifikationsmerkmal (ID) zur eindeutigen Identifizierung der Kommunikationsverbindung (6) aufweist.

6. System gemäß dem vorhergehenden Anspruch, wobei das System ausgeführt ist, durch das Identifikationsmerkmal (ID) die Richtung der Bündelung der Kommunikationsverbindung (6) und/oder die Position der ersten Kommunikationsplattform (4a) zu ermitteln.

7. System gemäß zumindest einem der Ansprüche 1, 2 und 4 bis 6, wobei die zweite Kommunikationsplattform (4b) eingerichtet ist, bei einem Durchfliegen (10) der gebündelten Kommunikationsverbindung (6) die eigene Position zu bestimmen.

8. System gemäß einem der vorhergehenden Ansprüche, wobei die erste Kommunikationsplattform eine Plattform zum Betrieb außerhalb der Erdatmosphäre, weiter insbesondere ein Satellit, weiter insbesondere in einem Low Earth Orbit (LEO) oder geostationären Orbit (GEO), ist; und/oder wobei die zweite Kommunikationsplattform eine erdnahe, zurückkehrende Plattform, insbesondere eine Plattform zum Betrieb in der Erdatmosphäre, weiter insbesondere ein Luftfahrzeug, weitere insbesondere ein Flugzeug, ist.

9. Eine zweite Kommunikationsplattform (4b), welche von einer ersten Kommunikationsplattform (4a) eine Kommunikationsverbindung (6) empfängt; wobei die erste Kommunikationsplattform (4a) eine erdferne Plattform ist;
wobei die Kommunikationsverbindung (6) als eine gebündelte Kommunikationsverbindung ausgebildet ist;
wobei die zweite Kommunikationsplattform (4b) ausgeführt ist, eine Richtung bzw. Orientierung der Bündelung der Kommunikationsverbindung (6) zu bestimmen;
wobei zweite Kommunikationsplattform (4b) ausgeführt ist, durch die bestimmte Richtung der Bündelung der Kommunikationsverbindung (6) und eine bestimmte Position der ersten Kommunikationsplattform (4a) eine Position der zweiten Kommunikationsplattform (4b) zu bestimmen; und
wobei die zweite Kommunikationsplattform ausgeführt ist, durch Auswerten eines Empfangsleistungspegels der Kommunikationsverbindung zu detektieren, inwieweit sie sich im Zentrum oder am Rande eines Ausbreitungsvolumens der Kommunikationsverbindung befindet;
**dadurch gekennzeichnet, dass**
die Kommunikationsverbindung eine Laserkommunikationsverbindung ist; und
die zweite Kommunikationsplattform ausgeführt ist, ihre Position in dem Ausbreitungsvolumen der Laserkommunikationsverbindung durch dynamische lokale Rasterverfahren zu bestimmen; und
die zweite Kommunikationsplattform ausgeführt ist, ein Kommunikationssignal, welches ein Zeitreferenz- bzw. Flugzeitsignal bereitstellt, mit einem Zeitreferenzsignal in der zweiten Kommunikationsplattform abzugleichen, um über eine Laufzeitbestimmung eine Entfernungsbestimmung der zweiten Kommunikationsplattform von der ersten Kommunikationsplattform vorzunehmen, und ausgehend von der bekannten Position der ersten Kommunikationsplattform sowie der Ausbreitungsgeometrie und -geschwindigkeit der Kommunikationsverbindung eine Höhe der zweiten Kommunikationsplattform zu bestimmen.

10. Verfahren (30) zur Positionsbestimmung einer Kommunikationsplattform; aufweisend die Schritte:
Bereitstellen (32) einer Kommunikationsverbindung (6) zwischen einer ersten Kommunikationsplattform (4a) und einer zweiten Kommunikationsplattform (4b), wobei die erste Kommunikationsplattform (4a) eine erdferne Plattform ist;
wobei die erste Kommunikationsplattform (4a) in Kommunikationsverbindung mit der zweiten Kommunikationsplattform (4b) steht, wobei die Kommunikationsverbindung (6) als eine gebündelte Kommunikationsverbindung ausgebildet ist;
Bestimmen (34) einer Richtung der Bündelung der Kommunikationsverbindung (6); und
Bestimmen (36) einer Position der zweiten Kommunikationsplattform (4b) basierend auf der bestimmten Richtung der Bündelung der Kommunikationsverbindung (6) und einer bestimmten Position der ersten Kommunikationsplattform (4a);
wobei durch Auswerten eines Empfangsleistungspegels der Kommunikationsverbindung detektiert wird, inwieweit sich die zweite Kommunikationsplattform im Zentrum oder am Rande eines Ausbreitungsvolumens der Kommunikationsverbindung befindet;
**dadurch gekennzeichnet, dass**
die Kommunikationsverbindung eine Laserkommunikationsverbindung ist; und die Position der zweiten Kommunikationsplattform in dem Ausbreitungsvolumen der Laserkommunikationsverbindung durch dynamische lokale Rasterverfahren bestimmt wird;
das Verfahren weiterhin aufweisend den Schritt
Vornehmen eines Zeitabgleichs eines ausgesendeten Kommunikationssignals zwischen erster Kommunikationsplattform und zweiter Kommunikationsplattform und Bestimmen, durch die Laufzeit sowie die Ausbreitungsgeschwindigkeit der Kommunikationsverbindung, eines Abstands zwischen erster Kommunikationsplattform und zweiter Kommunikationsplattform sowie Bestimmen einer dreidimensionalen Position der zweiten Kommunikationsplattform in dem Ausbreitungsvolumen der Laserkommunikationsverbindung.

## Claims

1. System (2) for determining the position of a communication platform, having
a first communication platform (4a); and
a second communication platform (4b);
wherein the first communication platform (4a) is in communication connection (6) with the second communication platform (4b);
wherein the communication connection (6) is formed as a focused communication connection;
wherein the system is embodied to determine the direction of the focusing of the communication connection (6); and
wherein the system is embodied to determine a position of the second communication platform (4b) by means of the determined direction of the focusing of the communication connection (6) and a determined position of the first communication platform (4a),
wherein the first communication platform (4a) is an Earth-remote platform; and
wherein the system is embodied to detect, by means of evaluating a reception power level of the communication connection, to what extent the second communication platform is located in the centre of or at the edge of a propagation volume of the communication connection;
**characterized in that**
the communication connection is a laser communication connection; and **in that** the system is embodied to determine the position of the second communication platform in the propagation volume of the laser communication connection by means of dynamic local scanning methods; and
the system is embodied to carry out a time synchronization of an emitted communication signal between first communication platform and second communication platform, and, by means of the propagation time and the propagation speed of the communication connection, to determine a distance between first communication platform and second communication platform and to determine a three-dimensional position of the second communication platform in the propagation volume of the laser communication connection.

2. System according to the preceding claim, wherein the first communication platform (4a) transmits the direction of the focusing of the communication connection (6), the position of the first communication platform (4a) and/or the position of the second communication platform (4b) to the second communication platform (4b).

3. System according to at least one of the preceding claims, wherein the first communication platform (4a) is configured to track the focused communication connection (6) to the second communication platform (4b).

4. System according to at least one of the preceding claims, wherein the focused communication connection (6) is formed as a directional communication connection.

5. System according to at least one of the preceding claims, wherein the communication connection (6) has an identification feature (ID) for uniquely identifying the communication connection (6).

6. System according to the preceding claim, wherein the system is embodied to ascertain the direction of the focusing of the communication connection (6) and/or the position of the first communication platform (4a) by means of the identification feature (ID).

7. System according to at least one of Claims 1, 2 and 4 to 6, wherein the second communication platform (4b) is configured to determine its own position when flying through (10) the focused communication connection (6).

8. System according to any of the preceding claims, wherein the first communication platform is a platform for operation outside the Earth's atmosphere, further in particular a satellite, further in particular in a low Earth orbit (LEO) or geostationary orbit (GEO); and/or wherein the second communication platform is a near-Earth, returning platform, in particular a platform for operation in the Earth's atmosphere, further in particular an aircraft, further in particular an aeroplane.

9. Second communication platform (4b), which receives a communication connection (6) from a first communication platform (4a);
wherein the first communication platform (4a) is an Earth-remote platform;
wherein the communication connection (6) is formed as a focused communication connection;
wherein the second communication platform (4b) is embodied to determine a direction or orientation of the focusing of the communication connection (6) ;
wherein second communication platform (4b) is embodied to determine a position of the second communication platform (4b) by means of the determined direction of the focusing of the communication connection (6) and a determined position of the first communication platform (4a); and
wherein the second communication platform is embodied to detect, by means of evaluating a reception power level of the communication connection, to what extent said platform is located in the centre of or at the edge of a propagation volume of the communication connection; **characterized in that**
the communication connection is a laser communication connection; and the second communication platform is embodied to determine its position in the propagation volume of the laser communication connection by means of dynamic local scanning methods; and
the second communication platform is embodied to synchronize a communication signal, which provides a time reference signal or flight time signal, with a time reference signal in the second communication platform, in order to carry out a determination of the distance between the second communication platform and the first communication platform by way of a propagation time determination, and to determine a height of the second communication platform on the basis of the known position of the first communication platform and the propagation geometry and propagation speed of the communication connection.

10. Method (30) for determining the position of a communication platform; having the steps of:
providing (32) a communication connection (6) between a first communication platform (4a) and a second communication platform (4b), wherein the first communication platform (4a) is an Earth-remote platform;
wherein the first communication platform (4a) is in communication connection with the second communication platform (4b), wherein the communication connection (6) is formed as a focused communication connection;
determining (34) a direction of the focusing of the communication connection (6); and
determining (36) a position of the second communication platform (4b) on the basis of the determined direction of the focusing of the communication connection (6) and a determined position of the first communication platform (4a);
wherein the method involves detecting, by means of evaluating a reception power level of the communication connection, to what extent the second communication platform is located in the centre of or at the edge of a propagation volume of the communication connection;
**characterized in that**
the communication connection is a laser communication connection; and the position of the second communication platform in the propagation volume of the laser communication connection is determined by means of dynamic local scanning methods;
the method furthermore having the step of
carrying out a time synchronization of an emitted communication signal between first communication platform and second communication platform and determining, by means of the propagation time and the propagation speed of the communication connection, a distance between first communication platform and second communication platform and determining a three-dimensional position of the second communication platform in the propagation volume of the laser communication connection.

## Revendications

1. Système (2) de détermination de position d'une plate-forme de communication, comprenant
une première plate-forme de communication (4a) ; et
une deuxième plate-forme de communication (4b) ;
la première plate-forme de communication (4a) se trouvant en liaison de communication (6) avec la deuxième plate-forme de communication (4b) ;
la liaison de communication (6) étant réalisée sous la forme d'une liaison de communication en faisceau ;
le système étant réalisé pour déterminer la direction de la mise en faisceau de la liaison de communication (6) ; et
le système étant réalisé pour déterminer une position de la deuxième plate-forme de communication (4b) par la direction déterminée de la mise en faisceau de la liaison de communication (6) et une position déterminée de la première plate-forme de communication (4a),
la première plate-forme de communication (4a) étant une plate-forme en apogée ; et
le système étant réalisé pour détecter, en interprétant un niveau de puissance de réception de la liaison de communication, dans quelle mesure la deuxième plate-forme de communication se trouve au centre ou au bord d'un volume de propagation de la liaison de communication ; **caractérisé en ce que**
la liaison de communication est une liaison de communication par laser ; et **en ce que**
le système est réalisé pour déterminer la position de la deuxième plate-forme de communication dans le volume de propagation de la liaison de communication par laser par un procédé de quadrillage local dynamique ; et
le système est réalisé pour effectuer une compensation du temps d'un signal de communication émis entre la première plate-forme de communication et la deuxième plate-forme de communication et pour déterminer une distance entre la première plate-forme de communication et la deuxième plate-forme de communication par le temps de fonctionnement ainsi que la vitesse de propagation de la liaison de communication et déterminer une position tridimensionnelle de la deuxième plate-forme de communication dans le volume de propagation de la liaison de communication par laser.

2. Système selon la revendication précédente, la première plate-forme de communication (4a) communiquant à la deuxième plate-forme de communication (4b) la direction de la mise en faisceau de la liaison de communication (6), la position de la première plate-forme de communication (4a) et/ou la position de la deuxième plate-forme de communication (4b).

3. Système selon au moins l'une des revendications précédentes, la première plate-forme de communication (4a) étant conçue pour asservir la liaison de communication (6) en faisceau à la deuxième plate-forme de communication (4b).

4. Système selon au moins l'une des revendications précédentes, la liaison de communication (6) en faisceau étant réalisée sous la forme d'une liaison de communication directionnelle.

5. Système selon au moins l'une des revendications précédentes, la liaison de communication (6) possédant une caractéristique d'identification (ID) servant à l'identification univoque de la liaison de communication (6) .

6. Système selon au moins l'une des revendications précédentes, le système étant réalisé pour identifier la direction de la mise en faisceau de la liaison de communication (6) et/ou la position de la première plate-forme de communication (4a) par la caractéristique d'identification (ID).

7. Système selon au moins l'une des revendications 1, 2 et 4 à 6, la deuxième plate-forme de communication (4b) étant conçue pour déterminer la position propre lors d'un passage en vol (10) dans de la liaison de communication (6) en faisceau.

8. Système selon au moins l'une des revendications précédentes, la première plate-forme de communication étant une plate-forme destinée à fonctionner en-dehors de l'atmosphère terrestre, en plus notamment un satellite, en plus notamment dans une orbite basse (LEO) ou une orbite géostationnaire (GEO) ; et/ou
la deuxième plate-forme de communication étant une plate-forme à proximité de la Terre, rentrante, notamment une plate-forme destinée à fonctionner dans l'atmosphère terrestre, en plus notamment un aéronef, en plus notamment un avion.

9. Deuxième plate-forme de communication (4b), laquelle reçoit une liaison de communication (6) de la part d'une première plate-forme de communication (4a) ; la première plate-forme de communication (4a) étant une plate-forme en apogée ;
la liaison de communication (6) étant réalisée sous la forme d'une liaison de communication en faisceau ;
la deuxième plate-forme de communication (4b) étant réalisée pour déterminer une direction ou une orientation de la mise en faisceau de la liaison de communication (6) ;
la deuxième plate-forme de communication (4b) étant réalisée pour déterminer une position de la deuxième plate-forme de communication (4b) par le biais de la direction déterminée de la mise en faisceau de la liaison de communication (6) et une direction déterminée de la première plate-forme de communication (4a) ; et
la deuxième plate-forme de communication étant réalisée pour détecter, en interprétant un niveau de puissance de réception de la liaison de communication, dans quelle mesure elle se trouve au centre ou au bord d'un volume de propagation de la liaison de communication ; **caractérisée en ce que**
la liaison de communication est une liaison de communication par laser ; et
la deuxième plate-forme de communication est réalisée pour déterminer sa position dans le volume de propagation de la liaison de communication par laser par un procédé de quadrillage local dynamique ; et
la deuxième plate-forme de communication est réalisée pour compenser un signal de communication, lequel fournit un signal de référence de temps ou de temps de vol, avec un signal de référence de temps dans la deuxième plate-forme de communication afin d'effectuer une détermination de distance entre la première plate-forme de communication et la deuxième plate-forme de communication par le biais de la détermination du temps de fonctionnement et, en partant de la position connue de la première plate-forme de communication ainsi que la géométrie et la vitesse de propagation de la liaison de communication, déterminer une altitude de la deuxième plate-forme de communication.

10. Procédé (30) de détermination de position d'une plate-forme de communication, comprenant les étapes suivantes :
fourniture (32) d'une liaison de communication (6) entre une première plate-forme de communication (4a) et une deuxième plate-forme de communication (4b), la première plate-forme de communication (4a) étant une plate-forme en apogée ;
la première plate-forme de communication (4a) se trouvant en liaison de communication (6) avec la deuxième plate-forme de communication (4b), la liaison de communication (6) étant réalisée sous la forme d'une liaison de communication en faisceau ;
détermination (34) d'une direction de la mise en faisceau de la liaison de communication (6) ; et
détermination (36) d'une position de la deuxième plate-forme de communication (4b) en se basant sur la direction déterminée de la mise en faisceau de la liaison de communication (6) et une position déterminée de la première plate-forme de communication (4a) ;
l'interprétation d'un niveau de puissance de réception de la liaison de communication servant à détecter dans quelle mesure la deuxième plate-forme de communication se trouve au centre ou au bord d'un volume de propagation de la liaison de communication ;
**caractérisé en ce que**
la liaison de communication est une liaison de communication par laser ; et
la position de la deuxième plate-forme de communication dans le volume de propagation de la liaison de communication par laser est déterminée par un procédé de quadrillage local dynamique ;
le procédé comprenant en outre l'étape suivante réalisation d'une compensation du temps d'un signal de communication émis entre la première plate-forme de communication et la deuxième plate-forme de communication et détermination, par le temps de fonctionnement ainsi que la vitesse de propagation de la liaison de communication, d'une distance entre la première plate-forme de communication et la deuxième plate-forme de communication ainsi que détermination d'une position tridimensionnelle de la deuxième plate-forme de communication dans le volume de propagation de la liaison de communication par laser.
